Europäisches Patentamt

European Patent Office

Office européen des brevets

(19)

(11) Publication number: **0 099 717**
**A2**

(12) **EUROPEAN PATENT APPLICATION**

(21) Application number: **83304037.1**

(22) Date of filing: **12.07.83**

(51) Int. Cl.³: **C 08 L 67/06**
**C 08 F 283/00, C 08 K 3/04**

(30) Priority: **20.07.82 GB 8220986**
**22.01.83 GB 8301799**

(43) Date of publication of application:
**01.02.84 Bulletin 84/5**

(84) Designated Contracting States:
**BE DE FR GB IT NL SE**

(71) Applicant: **The British Petroleum Company p.l.c.**
**Britannic House Moor Lane**
**London EC2Y 9BU(GB)**

(72) Inventor: **Crisp, Russell Ian**
**The British Petroleum Company p.l.c. Chertsey Road**
**Sunbury-on-Thames Middlesex, TW16 7LN(GB)**

(72) Inventor: **Fogg, Sidney George**
**The British Petroleum Company p.l.c. Chertsey Road**
**Sunbury-on-Thames Middlesex, TW16 7LN(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) Conducting unsaturated polyester resin compositions.

(57) The present invention relates to conducting unsaturated polyester resin compositions. Composition comprises an unsaturated polyester, a copolymerisable monomer and from 0.1% to 8% by weight of an electrically conducting grade of carbon black, uniformly dispersed throughout the composition by high shear mixing. The resin composition of the present invention can be converted to cured products having an electrical conductivity of at least $1 \times 10^{-6}$ reciprocal ohms per cm. The resins may be used to coat pipes which enables them to be electrically heated, if desired.

EP 0 099 717 A2

1

## CONDUCTING UNSATURATED POLYESTER RESIN COMPOSITIONS

The present invention relates to conducting unsaturated polyester resin compositions.

Unsaturated polyester compositions are well known and contain as essential components an unsaturated polyester and a monomeric material which is co-polymerisable therewith. Such compositions are generally liquid or paste-like and they can be converted or "cured" (for example by the action of heat, catalysts or radiation) to hard infusible shaped products which may be reinforced by e.g. glass fibres.

It is also known to incorporate conducting grades of carbon black into such compositions so that the cured resin product becomes electrically conducting. Hitherto it has been found necessary to use high levels of carbon black, for instance at least 10% by weight of the resin, and to ensure that the carbon black is not too thoroughly and uniformly dispersed throughout the resin composition, to obtain a satisfactory level of electrical conductivity in the cured· product. Such high levels of carbon black are however disadvantageous in some respects in that the resin composition becomes too viscous for many purposes, and cannot be cured satisfactorily.

The present invention comprises an unsaturated polyester resin composition comprising an unsaturated polyester and a copolymerisable monomer, said composition containing from 0.1% to 8% by weight of an electrically conducting grade of carbon black, uniformly dispersed throughout the composition by high shear mixing.

The unsaturated polyester is suitably a condensation product of a glycol and a mixture of an alpha, beta-unsaturated dibasic acid (for example maleic or fumaric acid) and a saturated dibasic acid such as phthalic acid, possibly modified by the presence of a small amount of a polyhydric alcohol such as pentaerythritol. Examples of suitable co-polymerisable monomeric materials are styrene, diallyl phthalate, and methyl methacrylate.

The resin composition of the present invention can be converted to cured products having an electrical conductivity of at least $1 \times 10^{-6}$ reciprocal ohms per cm., either directly or after dilution and simple mixing with an unsaturated polyester resin composition containing less or no carbon black to give a final composition having a concentration of carbon black of from 0.1 to less than 5% by weight based on the weight of the resin.

The present invention also comprises a process for making an unsaturated polyester resin composition which can be converted to cured products having an electrical conductivity of at least $1 \times 10^{-6}$ reciprocal ohms per cm., by mixing with an unsaturated polyester resin composition from 0.1% to 8% and preferably from 0.5 to 5% by weight based on the weight of resin of a conducting grade of carbon black, and subjecting the composition to high shear mixing at a shear rate of at least 1,000 reciprocal seconds and preferably at least 5,000 reciprocal seconds for a period of at least 1 minute.

In one embodiment of the invention the process for making the unsaturated polyester resin composition comprises at least two high shear mixing steps interspersed by a "wetting period" of typically 12 hours to enable the co-polymerisable monomer to penetrate the carbon particles. Thus a stable masterbatch can be prepared for instance by firstly carrying out a coarse mixing of the carbon black with the resin composition in a low shear mixer, secondly homogenising the composition in a high shear mixer at a shear rate of at least 1,000 reciprocal seconds for at least 1 minute, thirdly allowing the mixture to stand for a "wetting period" of from 2 to 24 hours, and finally repeating the high shear mixing in the second step at a shear rate of at least 1,000 reciprocal seconds for at least 1 minute. The duration of wetting can be substantially reduced to less than 2 hours by applying a vacuum to the carbon black/resin mixture, e.g. at a pressure of $2.7 \times 10^4$ Pa a wetting period of 15 minutes will suffice.

In a preferred embodiment of the present invention, the process may be shortened and simplified by first adding the carbon black to the copolymerisable monomer such as styrene or methyl methacrylate and then mixing the comonomer containing the carbon black with the unsaturated polyester in a single high shear mixing operation. This method has the advantage that the wetting period in the polyester is eliminated and the copolymerisable monomer containing the carbon black can be stored for an indefinite period prior to mixing with the polyester.

The present invention is further illustrated by the following example.

Example 1

Preparation of a stable masterbatch

1440g of an unsaturated polyester resin composition based on a polyester derived from maleic anhydride, isophthalic acid and propylene glycol and a copolymerisable monomer (styrene) content of 35% was mixed with 60g of a conductive carbon black, (XE - 2 black ex Phillips Petroleum Chemicals UK Ltd) using a Silverson high speed mixer Model AX fitted with the standard head until all the carbon black was wetted with the resin. The standard head was then replaced with the emulsifier head and the resin/carbon black composition mixed under high shear conditions for five minutes. The composition was allowed to stand overnight in a wetting period and was then mixed for a further five minutes using the emulsifier head. The product was a stable masterbatch having a grease-like consistency.

Example 2

Preparation of cured polyester sheet

One part of the masterbatch (25g) from Example 1 above was diluted with three parts of unmodified polyester resin (75g) to give a concentration of 1% carbon black, and mixed thoroughly by simple hand stirring using a spatula. 0.5g cobalt naphthenate was then added and stirred in, followed by 1.0g methyl ethyl ketone peroxide. The resin was then cast between glass plates coated with a polyvinyl alcohol release agent and fitted with a nitrile rubber gasket and cured at room temperature to give a sheet approximately 20cm x 20cm x 0.2cm. This was then post-cured at 65°C for 16 hours.

Three samples (6cm x 3cm) were cut from the sheet and the short sides painted with a highly conductive paint. The resistance of each sample was then measured and the conductivity calculated. The average value obtained was 1166 x $10^{-6}$ mho/cm.

Example 3

A conducting polyester resin was prepared using a polyester based on maleic anhydride, adipic acid and diethylene glycol, with a styrene monomer content of 35% by weight. Polyester resin (100g) and XE-2 carbon black (2g-ex Phillips Petroleum Chemicals UK Ltd), were mixed as in Example 1 above. Cobalt octoate (0.5g) and methyl ethyl ketone peroxide (1.0g) were added as initiators and the resin so formed was used to filament wind 5 layers of glass reinforcement onto a mandrel 14 mm in diameter. At this point two iron wire electrodes were laid onto the tube, parallel to its axis and on opposite sides. A further nine layers of glass/conducting polyester were then wound over the electrodes. The pipe was cured at room temperature and then post-cured at 70°C overnight. The finished pipe was removed from the mandrel and was measured to be 150 mm in length. The resistance between the embedded electrodes was measured to be 350 ohms.

The advantage of a pipe prepared by this method is that it may be heated electrically by passing current between the embedded electrodes. One end of the pipe was blocked with a bung and the pipe clamped vertically. It was then filled with mineral oil and provided with a thermocouple, connected to a digital thermometer, suspended in the oil. A potential of 20 V ac was then applied across the electrodes. A steady temperature of 45°C was achieved in the oil inside the pipe after 20 minutes. The potential was then increased to 40 V ac, when the temperature of the oil in the pipe rose to 140°C after a further 15 minutes.

Example 4

Preparation of a conductive polyester by predispersion of carbon black in styrene

7.15g of conductive carbon black (XE-2 ex Phillips Petroleum Petroleum Chemicals UK Ltd) were dispersed in 250g styrene monomer by simple hand mixing. This dispersion was stored in a sealed can for later use.

An unsaturated polyester was prepared from maleic anhydride, adipic acid and diethylene glycol and condensed to an acid number of 30 mg KOH per gram at 200°C. After cooling to 90°C, 400g of the polyester were diluted with 221.5g of the carbon black/styrene dispersion described above, to give a polyester resin with a styrene monomer content of 35% and 1 part by weight of carbon black per 100 parts of resin. The hot resin was mixed under high shear conditions for two minutes with a Silverson high shear laboratory mixer on full speeds and then cooled to room temperature.

The resin was then used to prepare a conducting sheet. Resin (100g), cobalt octoate (0.5g) and methyl ethyl ketone peroxide (1.0g) were mixed and cast into a sheet as described in Example 2. Three samples (6 cm x 3 cm) were cut from the sheet and the short sides painted with highly conductive paint. The resistance of each sample was then measured and the conductivity calculated. The average value obtained was $1995 \times 10^{-6}$ mho/cm.

Example 5

A resin was prepared of identical composition to that of Example 4 except that the unsaturated polyester was prepared as in Example 1 by mixing the resin, already containing the styrene monomer with carbon black using two high shear mixing periods interspersed by a "wetting period".

The average values for the conductivity of the conducting sheets prepared as in Example 4 from the resin thus obtained was $1950 \times 10^{-6}$ mho/cm.

Example 6

A resin was prepared of identical composition to that of Example 4, except that there was no wetting period and the carbon black was mixed directly with the polyester resin containing the styrene monomer in a single high shear mixing step.

The average values for the conductivity of the conducting sheets prepared as in Example 4 from the resin thus obtained was $1445 \times 10^{-6}$ mho/cm.

Claims:

1. An unsaturated polyester resin composition comprising an unsaturated polyester and a copolymerisable monomer, said composition containing from 0.1 to 8% by weight of an electrically conducting grade of carbon black uniformly dispersed throughout the composition by high shear mixing.

2. An unsaturated polyester resin composition according to claim 1 wherein said composition contains from 0.5 to 5% by weight of an electrically conducting grade of carbon black uniformly dispersed throughout the composition by high shear mixing.

3. An unsaturated polyester resin composition according to claim 1 or 2 wherein the uniform dispersion of carbon black is carried out by high shear mixing at a shear rate of at least 1000 reciprocal seconds for a period of at least 1 minute.

4. An unsaturated polyester resin composition according to any one of claims 1 to 3 wherein the uniform dispersion of carbon black is carried out by firstly mixing carbon black with the resin composition in a low shear mixer, secondly homogenising the composition in a high shear mixer at a shear rate of at least 1000 reciprocal seconds for at least 1 minute, thirdly allowing the mixture to stand for a wetting period up to 24 hours and finally repeating the high shear mixing as in the second step.

5. An unsaturated polyester resin composition according to claim 4 wherein a vacuum is applied to the carbon black/resin mixture during the wetting step.

6. An unsaturated polyester resin composition according to any one of the preceding claims 1 to 3 wherein the carbon black is uniformly dispersed in the resin by first adding the carbon black to the copolymerisable monomer and then mixing the monomer containing the carbon black with the unsaturated polyester in a single high shear mixing operation.

7. An unsaturated polyester resin composition according to any one of the preceding claims wherein the unsaturated polyester component is a condensation product of a glycol and a mixture of an alpha, beta-unsaturated dibasic acid and a saturated dibasic acid optionally modified by a small amount of a polyhydric alcohol.

8. An unsaturated polyester resin composition according to claim 7 wherein the unsaturated polyester component is a condensation product of a glycol and a mixture of a dibasic acid selected from maleic acid and fumaric acid with phthalic acid optionally modified by pentaerythritol.

9. An unsaturated polyester resin composition according to any one of the preceding claims wherein the copolymerisable monomer component is selected from styrene, diallyl phthalate and methyl methacrylate.

10. Cured products having an electrical conductivity of at least $1 \times 10^{-6}$ reciprocal ohms/cm produced from an unsaturated polyester resin composition according to any one of the preceding claims.